# EUROPEAN PATENT SPECIFICATION

(11) **EP 1 764 776 B1**
(45) Date of publication and mention of the grant of the patent: **29.10.2008**
(21) Application number: 06120707.2
(22) Date of filing: 14.09.2006
(51) Int. Cl.: G09G 5/00

(54) **Display apparatus and control method thereof**
Anzeigevorrichtung und Steuerverfahren dafür
Appareil d'affichage et son procédé de commande

(30) Priority: 16.09.2005 KR 20050086727
(43) Date of publication of application: 21.03.2007
(73) Proprietor: Samsung Electronics Co., Ltd., Suwon-si, Gyeonggi-Do (KR)
(72) Inventor: Kim, Young-chan, Uiwang-si Gyeonggi-do (KR); Park, Heung-jun, Yeongtong-gu Suwon-si Gyeonggi-do (KR)
(74) Representative: Perkins, Dawn Elizabeth

(56) References cited:
- WO-A-20/05048230
- US-A1- 2001 011 980
- US-A1- 2001 020 928

## Description

The present invention relates to a display apparatus and a control method thereof, and more particularly, to a display apparatus and a control method thereof to improve an on and/or off time for electric power supplied to a display.

In general, a display apparatus receives a video signal of a display mode from a video signal source, such as a computer, a TV broadcasting system and etc., to display an image on a display. The display apparatus can use a flat panel such as a liquid crystal display (LCD) panel, a plasma display panel (PDP), etc. as well as a cathode ray tube (CRT) as the display.

In the display apparatus, the display receives electric power and processes the video signal to be displayed as the image thereon. Further, a time difference between a time of receiving the electric power and a time of displaying an image should not exceed a predetermined range.

In a conventional display apparatus, an internal circuit of a power supply supplying the electric power comprises a capacitor, so that the time difference between the time of receiving the electric power and the time of displaying the image is a predetermined time. Thus, in a case where the time difference between the time of supplying the electric power to the display and the time of displaying the image exceeds the predetermined range, noise is generated in the display or an excessive voltage is applied to the display.

US 2001/0011980 discloses a system for preventing a white-screen error in a LCD device by reducing a time delay between a time of transmitting an enable signal to a DC/DC converter and a time for transmitting a data signal to the LCD gradually until a timing problem is overcome.

US 2001/0020928 discloses an LCD display unit incorporating a power operation timing controller.

WO 2005/048230 discloses a display apparatus having a GUI generator and a controller controlling the GUI generator to display an afterimage elimination image in an area set by operating a user input unit.

The present invention is set forth in the claims. Disclosed is a display apparatus, comprising:
a display unit;
a video processor configured to provide a video signal to the display unit according to an enable time when the video signal is enabled and a disable time when the video signal is disabled;
a power source configured to provide a power signal to the display unit according to an on time when the power signal starts to be supplied to the display unit and an off time when the power signal is stopped to the display unit and output a feedback power control signal; and
a controller configured to:
   apply a power control signal having an initial on/off time to the power source so as to control the on/off time of the power signal;
   receive the feedback power control signal;
   compare the on/off time of the feedback control signal with the enable/disable time of the video signal and determine whether a time difference between the on/off time of the feedback control signal and the enable/disable time of the video signal is out of a predetermined range; and
   control the initial on/off time of the power control signal to control the on/off time of the power signal or to control the enable/disable time of the video signal such that the time difference is within the predetermined range.

The enable/disable time of the video signal may comprise at least one of the enable time of the video signal when the video signal starts to be displayed on the display and the disable time of the video signal when the video signal finishes being displayed on the display.

The controller may delay the enable time of the video signal to adjust the sequence difference between the on time of the power signal and the enable time of the video signal, and delays the off time of the power signal to adjust the sequence difference between the off time of the power signal and the disable time of the video signal.

The controller may determine a delayed time based on a time difference between the on/off time and the initial on/off time, and determines whether the sequence difference is out of the predetermined range according to whether the delayed time is not within a preset range.

The controller may output the power control signal having a changed initial on/off time to the power supply so as to control the on/off time of the power signal.

The display apparatus may further comprise a user selection unit, wherein when a delaying time to delay the on/off time of the power signal is input through the user selection unit, the controller delays at least one of the on/off time of the power signal and the enable/disable time of the video signal according to the delaying time.

The display apparatus may further comprise a delaying time store unit to store the delaying time, wherein the controller delays the on/off time of the power signal and the enable/disable time of the video signal according to the time period corresponding to the delaying time stored in the delaying time store unit.

The present invention also provides a control method of a display apparatus, comprising:
supplying a video signal to a display unit according to an enable time when the video signal is enabled and a disable time when the video signal is disabled;
providing a power signal from a power source to the display unit according to an on time when the power signal starts to be supplied to the display unit and an off time when the power signal is stopped to the display unit and outputing a feedback power control signal from the power source; and
applying a power control signal having an initial on/off time to the power source so as to control the on/off time of the power signal;
comparing the on/off time of the feedback control signal with the enable/disable time of the video signal and determining whether a time difference between the on/off time of the feedback control signal and the enable/disable time of the video signal is out of a predetermined range; and
controlling the initial on/off time of the power control signal to control the on/off time of the power signal or controlling the enable/disable time of the video signal such that the time difference is within the predetermined range.

The enable/disable time of the video signal may comprise at least one of the enable time of the video signal when the video signal starts to be displayed on the display and the disable time of the video signal when the video signal finishes being displayed on the display.

The controlling of the sequence difference to be within the predetermined range may comprise delaying the enable time of the video signal to adjust the sequence difference between the on time of the power signal and the enable time of the video signal, and delaying the off time of the power signal to adjust the sequence difference between the off time of the power signal and the disable time of the video signal.

The determining of the sequence difference to be within the predetermined range may comprise determining delayed time based on a time difference between the on/off time and the initial on/off time which are outputted from the power supply, and determining whether the sequence difference is out of the predetermined range according to whether the delayed time is out of a preset range.

The controlling of the sequence difference to be within the predetermined range may comprise outputting the power control signal having a changed initial on/off time, and changing the on/off time of the power signal by the power control signal.

The control method of the display apparatus further may comprise receiving a delaying time input signal to delay the on/off time of the power signal; and delaying at least one of the on/off time and the enable/disable time as much as a delaying time.

The delaying of the on/off time according to a time period corresponding to the delaying time may comprise storing the delaying time, and delaying at least one of the on/off time and the enable/disable time according to the time period corresponding to the stored delaying time.

These and/or other aspects and advantages of the present invention will become apparent and more readily appreciated from the following description of the embodiments, taken in conjunction with the accompanying drawings of which:
Figure 1 is a control block diagram illustrating a display apparatus according to an embodiment of the present invention.
Figures 2A and 2B are timing diagrams illustrating a power signal and a video signal according to an embodiment of the present invention.
Figure 3 is a control flowchart illustrating a method of a display apparatus according to an embodiment of the present invention.

Reference will now be made in detail to the embodiments of the present invention, examples of which are illustrated in the accompanying drawings, wherein like reference numerals refer to like elements throughout. The embodiments are described below so as to explain the present invention by referring to the figures.

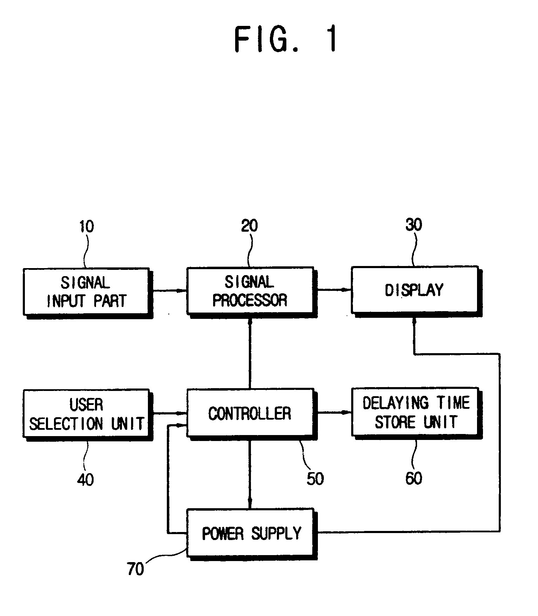

Figure 1 is a control block diagram illustrating a display apparatus according to an embodiment of the present invention. Referring to Figure 1, the display apparatus comprises a display 30, a signal input unit 10, a signal processor 20 to process a video signal input through the signal input unit 10, a power supply 70 to supply electric power to the display 30, and a controller 50 to control the signal input unit 10, the signal processor 20, and the display 30.

The signal input unit 10 may comprise terminals corresponding to various formats of video signals. For example, the signal input unit 10 may comprise a composite input terminal (not shown) to receive a composite signal, an S-video input terminal (not shown) to receive an S-video signal, a component input terminal (not shown) to receive a component signal, a PC input terminal (not shown) to receive a PC signal, and a TV input terminal (not shown) to receive a TV signal.

The signal processor 20 processes the video signal that is input through the signal input unit 10 to be displayed on the display 30. The signal processor 20 outputs a processed video signal to the display 30.

The signal processor 20 may comprise various configurations according to the type of the display 30. For example, if the display 30 is an LCD, a PDP or a digital light processing (DLP), the signal processor 20 comprises a scaler (not shown) to scale a digital video signal to correspond to the processed video signal. If the display 30 is a CRT, the signal processor 20 comprises an amplifier (not shown) to amplify the video signal, and vertical and horizontal deflectors (not shown) which deflect an electron beam based on a vertical synchronizing signal and a horizontal synchronizing signal of the video signal.

Further, the signal processor 20 may comprise a video decoder (not shown), an A/D converter (not shown) and a tuner (not shown) so as to convert the various formats of the video signals that are input through the signal input unit 10 into a signal adapted for the scaler. Thus, the scaler can process the video signals having various formats.

The video decoder decodes the composite signal and the S-video signal that is input through the composite input terminal and the S-video input terminal, respectively, and outputs decoded signals to the scaler. The A/D converter converts the component signal and the PC signal which are input through the component input terminal and the PC input terminal, respectively, into digital signals, and outputs the digital signals to the scaler. The tuner selects and amplifies the TV signal input through the TV input terminal, and outputs the TV signal to the A/D converter. The video decoder and the A/D converter selectively process one of the video signals that are input through respective corresponding input terminals and output the video signal to the scaler by the controller 50.

The display 30 receives the signals processed by the signal processor 20 and displays a predetermined image. The display 30 comprises a display module (not shown) where the images are displayed, and a module driving part (not shown) to process the signals from the signal processor 20 to be displayed on the display module. The display module may comprise a CRT, a DLP, an LCD, a PDP, etc.

In the case of the DLP module, the module driving part may comprise an optical engine. In case of the LCD module, the module driving part may comprise a printed circuit board (PCB) to convert the signals input from the signal processor 20 into a gate signal and a data signal. Thus, the display 30 may comprise a module driving part corresponding to the display module type.

The power supply 70 supplies electric power to the display 30. The power supply 70 can output a power signal having a predetermined level to the display 30 according to a power control signal of the controller 50.

The controller 50 controls the signal processor 20 to output the video signal to the display 30. The controller 50 controls the signal processor 20 to adjust an enable/disable time for the video signal. The enable/disable time of the video signal comprises at least one of an enable time when the video signal is enabled and a disable time when the video signal is disabled. The enable time may comprise at least one of when the video signal starts to be transferred to the display 30 and when the video signal is enabled to be displayed on the display 30. The disable time may comprise at least one of when the transfer of the video signal to the display 30 stops and when the video signal is disabled to not be displayed on the display 30.

The controller 50 controls the power supply 70 to output the power signal to turn on/off the display 30. The controller 50 outputs the power control signal to the power supply 70 to adjust an on/off time for the power signal. The on/off time comprises at least one of an on time when the power signal is on and an off time when the power signal is off.

When the controller 50 determines whether at least one of a first sequence difference, i.e., a time difference between the on time of the power signal and the enable time of the video signal, and a second sequence difference, i.e., a time difference between the off time of the power signal and the disable time of the video signal is out of a predetermined range, the controller 50 can control each of the first sequence difference and the second sequence difference to be within the predetermined range. When the time difference is within the predetermined range, the time difference may be larger or smaller than a predetermined reference time by a predetermined limit. The first and second sequence differences may also be within first and second predetermined ranges, respectively. The first and second predetermined ranges may be different from each other depending on start up and shut down characteristics of the display apparatus.

To adjust the first and second sequence differences, the controller 50 may change at least one of the on/off time for the power signal output from the power supply 70 and the enable/disable time for the video signal output from the signal processor 20. Thus, the controller 50 can control the power supply 70 to change the on/off times or the signal processor 20 to change the enable/disable times if at least one of the first and second sequence differences are out of the predetermined range. The controller 50 outputs the power control signal to the power supply 70 to output the power signal having a predetermined on/off time. The predetermined on/off time for the power control signal to control the on/off time is called an initial on/off time.

When the power supply 70 receives the power control signal having the initial on/off time, the power supply 70 outputs the power signal at an on/off time. The on/off time is obtained by delaying the initial on/off time by a predetermined time through a capacitor, or the like, internally provided in the power supply 70, to the display 30. On the other hand, the enable/disable times of the video signal are may not be delayed in the signal processor 20.

Therefore, the controller 50 can determine a delayed time difference based on the time difference between the on/off times of a feedback power signal output from the power supply 70 and the initial on/off time of the power control signal. The feedback power signal can be output when the power supply 70 starts supplying power to the display 30. Then, the controller 50 can determine whether the first and second sequence differences are out of a predetermined range according to the delayed time difference which is out of a preset range. The controller 50 may initialize the power control signal to control the power signal before the controller 50 determines the delayed time difference. The controller 50 then compares the initial on/off time of the power control signal with the on/off times of the feedback power signal to determine the delayed time difference.

The controller 50 can determine the on/off times of the power supply 70 on the basis of the feedback power signal from the power supply 70. The controller 50 can directly compare the on/off times of the feedback power signal with the enable/disable times of the video signal.

Therefore, based on the delayed time difference, the controller 50 changes the initial on/off time of the power control signal to control the on/off times of the power signal and outputs a changed power control signal to the power supply 70.

Meanwhile, the display apparatus may further comprise a user selection unit 40. The user selection unit 40 may be variously implemented by an input key, a button, etc., so that a user inputs or selects a desired function. The display apparatus can receive information about a delaying time through the user selection unit 40 so as to control the on/off times of the power signal. The user selection unit 40 can provide a predetermined delaying time input signal to the controller 50. The controller 50 can then determine the delaying time value from the predetermined delaying time input signal.

The controller 50 may delay the on/off times of the power signal according to the time period corresponding to the delaying time when the delaying time is input through the user selection unit 40. The controller 50 stores the input delaying time in a delaying time store unit 60 and delays the on/off times of the power signal based on the input delaying time.

That is, when the controller 50 receives the input delaying time through the user selection unit 40 while outputting the power control signal having the predetermined initial on/off time, the controller 50 may provide a second power control signal having a second initial on/off time delayed according to the time period corresponding to the delaying time to the power supply 70. The input delaying time input through the user selection unit 40 can be input when the display apparatus is manufactured or when a serviceperson determines whether the sequence difference is within the predetermined range. Alternatively, an ordinary user may input the delaying time.

In a case that the on/off times do not correspond to the initial on/off time, the controller 50 calculates the initial on/off time to delay the on/off times of the power signal according to the time period corresponding to the delaying time, and inputs a power control signal having the initial on/off time delayed as much as the calculated time to the power supply 70.

A part of a program statement of the controller 50 to control the on/off time of the power signal according to an exemplary embodiment of the present invention is shown below.

```
 void LcdOn(void)
 {
    SetBlt(P2, PANEL_POWER); // Panel On
    DelayMs(ON_DELAY + ondelay + user_on_delay);
    chr_reg1 = ReadScaler(OCTRL3); // LVDS enable
    chr_reg1 |=0x01:
    WriteScaler(OCTRL3, chr_reg1);
    chr_reg1 = ReadScaler(PLLCTARL1): // data enable
    chr_reg1 &= (∼0x01);
    WriteScaler(PLLCTRL1, chr_reg1);
 }

 void LcdOff(void)
 {
    chr_reg1 = ReadScaler(OCTRL3); //LVDS disable
    chr_req1 &=(-0x01);
    WriteScaler(OCTRL3, chr_reg1);

    chr_reg1 = ReadScaler(PLLCTRL1); // data disable
    chr_reg1 |= (0x01) ;
    WriteScaler(PLLCTRL1, chr_reg1);
    DelayMs(OFF_DELAY - offdelay + user_off_delay);
    ClrBit(P2, PANEL_POWER); // Panel Off
 ,}
```

As shown in the program statement, the display apparatus supplies the electric power to the display 30 (Panel On) and enables an LVDS signal (LVDS enable) after the predetermined time. Then, the display 30 starts to communicate with the respective units and data are enabled (data enable), so that the video signal is applied to the display 30. Thus, when the delaying time elapses after the electric power is supplied to the display 30, the controller 50 outputs the video signal to the display 30. At this point, 'ON_DELAY' is an invariable value, and 'ondelay' is a value capable of delaying the initial on time of the power control signal according to the determined first sequence difference between the on time of the power signal and the enable time of the video signal on the basis of the feedback of the power signal output from the power supply 70.

Moreover, 'user_on_delay' is a value input through the user selection unit 40 and is used as, for example, the input delay time, to control the first sequence difference.

Meanwhile, to turn off the display 30, the display apparatus disables the LVDS signal (LVDS disable). Then, the display apparatus disables the data applied from the signal processor 20 (data disable), and then stops the electric power from being supplied to the display 30 (Panel Off). Thus, when the delaying time elapses after the video signal is disabled, the controller 50 turns off the display 30. Here, 'OFF_DELAY' is an invariable value and 'offdelay' is a value capable of delaying the initial off time of the power control signal according to the determined second sequence difference between the off time of the power signal and the disable time of the video signal on the basis of the feedback of the power signal outputted from the power supply 70.

Furthermore, 'user_off_delay' is a value input through the user selection unit 40 and is used to control the second sequence difference..

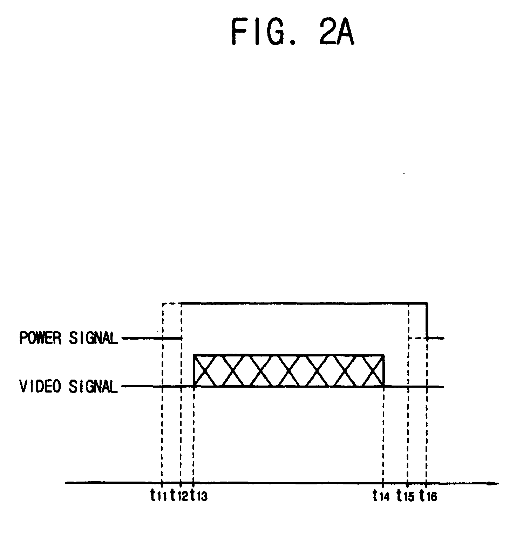

Figure 2A is a timing diagram illustrating the power signal and the video signal before the sequence differences are not compensated in the present invention. Referring to Figure 2A, the video signal is enabled at 't13' and disabled at 't14'. That is, the enable time of the video signal is 't13', and the disable time of the video signal is 't14'. When the power supply 70 is controlled by the power control signal to supply the electric power to the display 30 at 't11' and block the electric power at 't15', the power supply 70 substantially outputs an on power signal at 't12' to supply the electric power to the display 30 and an off power signal at 't16' to block the electric power. That is, the initial on time of the power control signal is 't11', the on time of the power signal is 't12', the initial off time of the power control signal is 't15', and the off time of the power signal is 't16'.

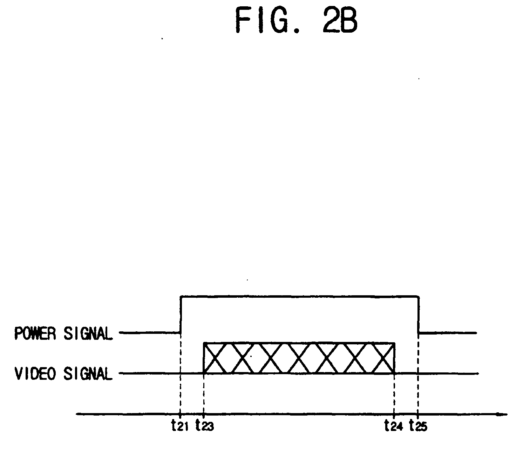

Figure 2B is a timing diagram illustrating the power signal and the video signal where the sequence differences are compensated for in the present invention. That is, when the controller 50 adjusts the sequence difference, i.e., compensates the sequence differences to be within the predetermined range, the timing diagram of the power signal and the video signal appears as illustrated in Figure 2B.

Referring to Figure 2B, the power supply 70 is controlled by the power control signal to supply the electric power to the display 30 and the on time of the power signal is 't21', the enable time of the video signal is 't23', the off time of the power signal is't25', and the disable time of the video signal is't24'.

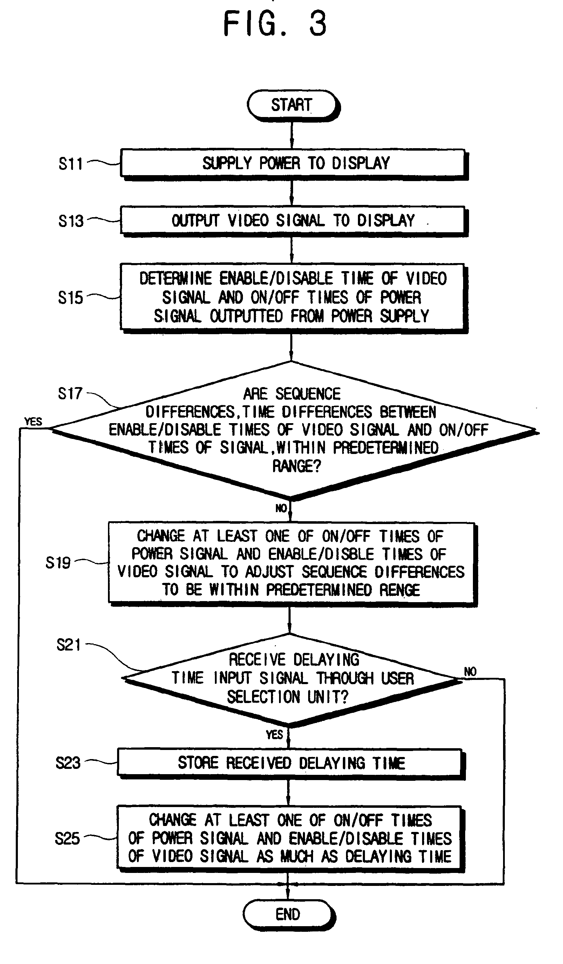

Figure 3 is a control flowchart illustrating the display apparatus according to an embodiment of the present invention. Referring to Figure 3, the display apparatus outputs the power signal to the display 30 to turn on/off the display 30 at operation S11. At operation S13, the video signal is output to the display 30. At operation S15, the controller 50 determines the enable/disable times of the video signal and the on/off times of the power signal output from the power supply 70. Based on the enable/disable times of the video signal and the on/off times of the power signal, the controller 50 determines whether the sequence differences, time differences between the enable/disable times of the video signal and the on/off times of the power signal, are within the predetermined range at operation S17). When the sequence differences are out of the predetermined range, the controller 50 controls at least one of the power on/off signal and the video signal enable/disable signal, so that the sequence differences become within the predetermined range.

The controller 50 delays the enable time of the video signal to adjust the first sequence difference, the time difference between the on time of the power signal and the enable time of the video signal, and delays the off time of the power signal to adjust the second sequence difference, the time difference between the off time of the power signal and the disable time of the video signal.

Meanwhile, in the case that the controller 50 receives the predetermined delaying time input signal through the user selection unit 40 at operation S21, the controller 50 stores the received delaying time in the delaying time store unit 60 at operation S23 and changes the sequence differences according to the time period corresponding to the delaying time (Operation S25). The controller 50 may delay at least one of the on/off times and the enable/disable times by the delaying time.

As described above, the present invention provides a display apparatus and a control method thereof, in which a sequence difference, i.e., a time difference between an enable/disable time for a video signal to be applied to a display and an on/off time for a power signal to be applied to the display is adjusted to be within a predetermined range.

Thus, the present invention prevents malfunctions such as screen noise, overvoltage generation and etc., generated when the sequence differences are out of the predetermined range.

Although a few embodiments of the present invention have been shown and described, it will be appreciated by those skilled in the art that changes may be made in these embodiments without departing from the scope of the present invention as defined in the appended claims.

## Claims

1. A display apparatus, comprising:
a display unit (30);
a video processor (20) configured to provide a video signal to the display unit (30) according to an enable time event when the video signal is enabled and a disable time event when the video signal is disabled;
a power source (70) configured to provide a power signal to the display unit (30) according to an on time event when the power signal starts to be supplied to the display unit (30) and an off time event when the power signal is stopped to the display unit (30) and output a feedback power signal; and
a controller (50) configured to:
apply a power control signal, having an initial on and off time event, to the power source (70) so as to control respectively the on and off time event of the power signal;
receive the feedback power signal;
**characterised in that** the controller is configured to
compare the on time event of the feedback power signal with the enable time event of the video signal and determine whether a first time difference between the on time event of the feedback power signal and the enable time event of the video signal is outside of a first predetermined range;
and/or compare the off time event of the feedback power signal with the disable time event of the video signal and determine whether a second time difference between the off time event of the feedback power signal and the disable time event of the video signal is outside of a second predetermined range;
control the initial on time event of the power control signal or the enable time event of the video signal such that the first time difference is within the first predetermined range;
and/or control the initial off time event of the power control signal or the disable time event of the video signal such that the second time difference is within the second predetermined range.

2. The display apparatus according to claim 1, wherein:
the enable time event of the video signal is when the video signal starts to be displayed on the display unit (30) and the disable time event of the video signal is when the video signal finishes being displayed on the display unit (30).

3. The display apparatus according to claim 1 or 2, wherein the controller (50) is configured to delay the enable time event of the video signal to adjust the first time difference, and to delay the off time event of the power signal to adjust the second time difference.

4. The display apparatus according to any one of the preceding claims, wherein the controller (50) is configured to determine a delay time based on a difference between the on time event of the feedback power signal and the initial on time event of the power control signal or a difference betweeen the off time event of the feedback power signal and the initial off time event of the power control signal, and determine whether the first and/or second time difference is outside of the respective first and/or second predetermined range according to whether the delay time is not within a preset range.

5. The display apparatus according to claim 4, wherein the controller (50) is configured to output the power control signal having a changed initial on and/or off time event to the power source (70) so as to control respectively the on and/or off time event of the power signal.

6. The display apparatus according to any one of the preceding claims, further comprising:
a user selection unit (40);
wherein the controller (50) is configured to, when a delaying time to delay the on and/or off time event of the power signal is input through the user selection unit (40), delay at least one of the on and/or off time event of the power signal and the enable and/or disable time event of the video signal according to the delaying time.

7. The display apparatus according to claim 6, further comprising:
a delaying time store unit (60) having the delaying time stored therein, wherein the controller (50) is configured to delay the on and/or off time event of the power signal or the enable and/or disable time event of the video signal according to a period corresponding to the delaying time stored in the delaying time store unit (60).

8. A control method of a display apparatus, comprising:
supplying a video signal to a display unit (30) according to an enable time event when the video signal is enabled and a disable time event when the video signal is disabled;
providing a power signal from a power source (70) to the display unit (30) according to an on time event when the power signal starts to be supplied to the display unit (30) and an off time event when the power signal is stopped to the display unit (30) and outputing a feedback power signal from the power source (70);
applying a power control signal having an initial on and off time to the power source (70) so as to control the on and off time of the power signal;
**characterised in that** the control method comprises the method steps of:
comparing the on time event of the feedback power signal with the enable time event of the video signal and determining whether a first time difference between the on time event of the feedback power signal and the enable time event of the video signal is outside of a first predetermined range;
and/or comparing the off time event of the feedback power signal with the disable time event of the video signal and determining whether a second time difference between the off time event of the feedback power signal and the disable time event of the video signal is outside of a second predetermined range;
controlling the initial on time event of the power control signal or the enable time event of the video signal such that the first time difference is within the first predetermined range;
and/or controlling the initial off time event of the power control signal or the disable time event of the video signal such that the second time difference is within the second predetermined range

9. The control method according to claim 8, wherein:
the enable time event of the video signal is when the video signal starts to be displayed on the display unit (30) and the disable time event of the video signal is when the video signal finishes being displayed on the display unit (30).

10. The control method according to claim 8 or 9, wherein the controlling of the time difference comprises delaying the enable time event of the video signal to adjust the first time difference, and delaying the off time of the power signal to adjust the second time difference.

11. The control method according to claim 8, 9 or 10, further comprising:
determining a delay time based on a difference between the on time event of the feedback power signal and the initial on time event of the power control signal or a difference between the off time event of the feedback power signal and the initial off time event of the power control signal; and
determining whether the time difference is outside of the respective first and/or second predetermined range according to a determination of whether the delay time is outside of a preset range.

12. The control method according to claim 11, wherein controlling the first and/or second time difference to be within the first and/or second predetermined range respectively comprises outputting the power control signal having a changed initial on and/or off time respectively, and changing respectively the on and/or off time of the power signal by the power control signal.

13. The control method according to any one of claims 8 to 12, further comprising:
receiving a delaying time input signal to delay the on and/or off time event of the power signal; and delaying at least one of the on and/or off time event and the enable and/or disable time event according to a delaying time.

14. The control method of the display apparatus according to claim 13, wherein the delaying of the on and/or off time event according to a time period corresponding to the delaying time comprises storing the delaying time, and delaying at least one of the on and/or off time and the enable and/or disable time event by as much as the stored delaying time.

## Patentansprüche

1. Anzeigevorrichtung, umfassend,
- eine Anzeigeeinrichtung (30);
- ein Videoprozessor (20), dafür konfiguriert, ein Videosignal für eine Anzeigeeinrichtung (30) bereit zu stellen, entsprechend einem Freigabezeitereignis, wenn das Videosignal freigegeben ist und einem Sperrzeitereignis, wenn das Videosignal gesperrt ist;
- eine Stromversorgung (70), dafür konfiguriert, der Anzeigeeinrichtung (30) ein Stromsignal zur Verfügung zu stellen, entsprechend einem Einschaltzeitereignis, wenn die Zufuhr des Stromsignals zu der Anzeigeeinrichtung (30) beginnt und einem Ausschaltzeitereignis, wenn die Zufuhr des Stromsignals zu der Anzeigeeinrichtung (30) gestoppt wird und ein Rückmeldestromsignal auszusenden; und
- Eine Steuer-/Reglervorrichtung (50), dafür konfiguriert:
Ein Stromsteuersignal, das ein anfängliches Einschalt- und Ausschaltzeitereignis aufweist, zu einer Stromversorgung (70) anzulegen, um so entsprechend das Einschalt- und Ausschaltzeitereignis des Stromsignals zu steuern; und
Das Rückmeldestromsignal zu empfangen;
**ist dadurch gekennzeichnet, dass**
der Regler dafür konfiguriert ist
das Einschaltzeitereignis des Rückmeldestromsignals mit dem Freigabezeitereignis des Videosignals zu vergleichen und
zu bestimmen, ob eine erste zeitliche Differenz zwischen dem Einschaltzeitereignis des Rückmeldestromsignals und dem Freigabezeitereignis des Videosignals außerhalb eines ersten vorbestimmten Bereichs liegt;
und/oder das Ausschaltzeitereignis des Rückmeldestromsignals mit dem Speerzeitereignis des Videosignals zu vergleichen und
zu bestimmen, ob eine zweite zeitliche Differenz zwischen dem Ausschaltzeitereignis des Rückmeldestromsignals und dem Speerzeitereignis des Videosignals außerhalb eines zweiten vorbestimmten Bereichs liegt;
das anfängliche Einschaltzeitereignis des Stromsteuersignals oder das Freigabezeitereignis des Videosignals so zu steuern, dass die erste zeitliche Differenz innerhalb des ersten vorbestimmten Bereichs liegt;
und/oder das anfängliche Ausschaltzeitereignis des Stromsteuersignals oder das Sperrzeitereignis des Videosignals so zu steuern, dass die zweite zeitliche Differenz innerhalb des zweiten vorbestimmten Bereichs liegt.

2. Anzeigevorrichtung nach Anspruch 1, wobei das Freigabezeitereignis des Videosignals dann ist, wenn das Videosignal beginnt auf der Anzeigeeinrichtung (30) angezeigt zu werden und das Speerzeitereignis des Videosignals dann ist, wenn das Videosignal aufhört auf der Anzeigeeinrichtung (30) angezeigt zu werden.

3. Anzeigevorrichtung nach Anspruch 1 oder 2, wobei die Steuer-/Reglervorrichtung (50) dafür konfiguriert ist, das Freigabezeitereignis des Videosignals zu verzögern, um die erste zeitliche Differenz anzupassen und um das Ausschaltzeitereignis des Stromsignals zu verzögern, um die zweite zeitliche Differenz anzupassen.

4. Anzeigevorrichtung nach einem der vorangegangenen Ansprüche, wobei die Steuer-/Reglervorrichtung (50) dafür konfiguriert ist, um eine Zeitverzögerung zu bestimmen, die auf einer Differenz zwischen dem Einschaltzeitereignis des Rückmeldestromsignals und dem anfänglichen Einschaltzeitereignis des Stromsteuersignals basiert oder auf einer Differenz zwischen dem Ausschaltzeitereignis des Rückmeldestromsignals und dem anfänglichen Ausschaltzeitereignis des Stromsteuersignals basiert, und zu bestimmen, ob die erste und/oder zweite zeitliche Differenz sich außerhalb des entsprechenden ersten und/oder zweiten vorgegebenen Bereichs befindet in Abhängigkeit dazu, ob die Verzögerungszeit nicht innerhalb des vorgegebenen Bereich liegt.

5. Anzeigevorrichtung nach Anspruch 4, wobei die Steuer-/Reglervorrichtung (50) dafür konfiguriert ist, das Stromsteuersignal, das ein geändertes anfängliches Einschalt- und/oder Ausschaltzeitereignis besitzt, an die Stromversorgung (70) auszugeben, um so das Einschalt- und Ausschaltzeitereignis des Stromsignals entsprechend zu steuern.

6. Anzeigevorrichtung nach einem der vorhergegangenen Ansprüche, ferner umfassend:
eine Bedienerauswahleinrichtung (40);
wobei die Steuer-/Reglervorrichtung (50) dafür konfiguriert ist, dann, wenn eine Verzögerungszeit zum Verzögern des Einschalt- und/oder Ausschaltzeitereignisses des Stromsignals mittels der Bedienerauswahleinrichtung (40) eingegeben ist, wenigstens eines der Einschalt- und/oder Ausschaltereignisse des Stromsignals und/oder eines der Freigabe- und/oder Speerzeitereignisse des Videosignals entsprechend der Verzögerungszeit zu verzögern.

7. Anzeigevorrichtung nach Anspruch 6, ferner umfassend:
eine Verzögerungszeitspeichereinrichtung (60), in der die Verzögerungszeit gespeichert ist, wobei die Steuer-/Reglervorrichtung (50) dafür konfiguriert ist, das Einschalt- und/oder Ausschaltzeitereignis des Stromsignals oder das Freigabe- und/oder Speerzeitereignis des Videosignals, gemäß einer Zeitdauer zu verzögern, die der Verzögerungszeit, die in der Verzögerungszeitspeichereinrichtung (60) gespeichert ist, entspricht.

8. Ein Steuer-/Regelverfahren einer Anzeigevorrichtung enthält:
Zuführen eines Videosignals zu einer Anzeigeeinrichtung (30) entsprechend einem Freigabezeitereignis, wenn das Videosignal freigegeben ist und einem Sperrzeitereignis, wenn das Videosignal gesperrt ist;
Bereitstellen eines Stromsignals von einer Stromversorgung (70) für eine Anzeigeeinrichtung (30) gemäß eines Einschaltzeitereignisses, wenn die Zufuhr des Stromsignals zu der Anzeigeeinrichtung (30) beginnt und eines Ausschaltzeitereignisses, wenn die Zufuhr des Stromsignals zu der Anzeigeeinrichtung (30) gestoppt wird und Aussenden eines Rückmeldestromsignals von der Stromversorgung (70);
Ausführen eines Stromsteuersignals, das ein anfängliches Einschaltund/oder Ausschaltzeitereignis zu einer Stromversorgung (70) aufweist, um so das Einschalt- und/oder Ausschaltzeitereignis des Stromsignals zu steuern,
**ist dadurch gekennzeichnet, dass**
das Steuerverfahren die folgenden Verfahrensschritte enthält:
Vergleichen des Einschaltzeitereignis des Rückmeldestromsignals mit dem Freigabezeitereignis des Videosignals und
Bestimmen, ob eine erste zeitliche Differenz zwischen dem Einschaltzeitereignis des Rückmeldestromsignals und dem Freigabezeitereignis des Videosignals außerhalb eines ersten vorbestimmten Bereichs liegt; und/oder
Vergleichen des Ausschaltzeitereignis des Rückmeldestromsignals mit dem Speerzeitereignis des Videosignals und
Bestimmen, ob eine zweite zeitliche Differenz zwischen dem Ausschaltzeitereignis des Rückmeldestromsignals und dem Speerzeitereignis des Videosignals außerhalb eines zweiten vorbestimmten Bereichs liegt;
Steuern des anfänglichen Einschaltzeitereignis des Stromsteuersignals oder des Einschaltzeitereignis des Videosignals, so dass die erste zeitliche Differenz innerhalb des ersten vorbestimmten Bereichs liegt; und/oder
Steuern des anfänglichen Ausschaltzeitereignis des Stromsteuersignals oder des Ausschaltzeitereignis des Videosignals, so dass die zweite zeitliche Differenz innerhalb des zweiten vorbestimmten Bereichs liegt.

9. Steuer-/Regelverfahren nach Anspruch 8, wobei:
das Freigabezeitereignis des Videosignals dann ist, wenn das Videosignal beginnt auf der Anzeigeeinrichtung (30) angezeigt zu werden und das Speerzeitereignis des Videosignals dann ist, wenn das Videosignal aufhört auf der Anzeigeeinrichtung (30) angezeigt zu werden.

10. Steuer-/Regelverfahren nach Anspruch 8 oder 9, wobei das Kontrollieren der zeitlichen Differenz das Verzögern des Freigabezeitereignis des Videosignals enthält, um die erste zeitliche Differenz anzupassen, und das Verzögern des Ausschaltzeitereignis des Videosignals enthält, um die zweite zeitliche Differenz anzupassen.

11. Steuer-/Regelverfahren nach Anspruch 8, 9 oder 10, ferner umfassend:
Bestimmen einer Verzögerungszeit, die auf einer Differenz zwischen dem Einschaltzeitereignis des Rückmeldestromsignals und dem anfänglichen Einschaltzeitereignis des Stromsteuersignals basiert; oder auf einer Differenz zwischen dem Ausschaltzeitereignis des Rückmeldestromsignals und dem anfänglichen Ausschaltzeitereignis des Stromsteuersignals basiert und
Bestimmen, ob sich die zeitliche Differenz außerhalb des entsprechenden ersten und/oder zweiten vorgegebenen Bereichs befindet, in Abhängigkeit dazu, ob sich die Verzögerungszeit außerhalb eines vorgegebenen Bereichs befindet.

12. Steuer-/Regelverfahren nach Anspruch 11, wobei das Steuern der ersten und/oder zweiten zeitlichen Differenz, entsprechend ob es sich innerhalb des ersten und/oder zweiten vorgegebenen Bereichs befindet, enthält Aussenden des Stromsteuersignals, das ein entsprechend verändertes anfängliches Einschalt- und/oder Ausschaltzeitereignis besitzt, und entsprechendes Ändern des Einschalt- und/oder Ausschaltzeitereignis durch das Stromsteuersignal.

13. Steuer-/Regelverfahren nach einem der Ansprüche 8 bis 12, ferner umfassend:
Empfangen eines Verzögerungszeiteingabesignals zum Verzögern des Einschalt- und/oder Ausschaltzeitereignis des Stromsignals; und
Verzögern wenigstens des Einschalt- und/oder Ausschaltzeitereignisses und/oder des Freigabe- und/oder Speerzeitereignisse entsprechend einer Verzögerungszeit.

14. Steuerverfahren der Anzeigeeinrichtung nach Anspruch 13, wobei das Verzögern des Einschalt- und/oder Ausschaltzeitereignis gemäß einer Zeitdauer, die der Verzögerungszeit entspricht, das Speichern der Verzögerungszeit, und das Verzögern wenigstens des Einschalt- und/oder Ausschaltzeitereignisses und/oder des Freigabe- und/oder Speerzeitereignisses um die gespeicherte Verzögerungszeit enthält.

## Revendications

1. Appareil d'affichage, comprenant :
une unité d'affichage (30) ;
un processeur vidéo (20) configuré pour fournir un signal vidéo à l'unité d'affichage (30) selon un évènement d'heure d'activation quand le signal vidéo est activé et un évènement d'heure de désactivation quand le signal vidéo est désactivé ;
une source de puissance (70) configurée pour fournir un signal de puissance à l'unité d'affichage (30) selon un évènement d'heure de mise en marche quand le signal de puissance commence à être fourni à l'unité d'affichage (30) et un évènement d'heure d'arrêt quand le signal de puissance est arrêté sur l'unité d'affichage (30) et émet un signal de puissance de rétroaction ; et
un contrôleur (50) configuré pour :
appliquer un signal de commande de puissance ayant un évènement d'heure de mise en marche et d'arrêt initiale à la source de puissance (70) de façon à contrôler respectivement l'évènement d'heure de mise en marche et d'arrêt du signal de puissance ;
recevoir le signal de puissance de rétroaction ;
**caractérisé en ce que** le contrôleur est configuré pour
comparer l'événement d'heure de mise en marche du signal de puissance de rétroaction avec l'événement d'heure d'activation du signal vidéo et déterminer si une première différence d'heure entre l'événement d'heure de mise en marche du signal de puissance de rétroaction et l'événement d'heure d'activation du signal vidéo est en dehors d'une première plage prédéterminée ;
et/ou comparer l'événement d'heure d'arrêt du signal de puissance de rétroaction avec l'événement d'heure de désactivation du signal vidéo et déterminer si une seconde différence d'heure entre l'événement d'heure d'arrêt du signal de puissance de rétroaction et l'événement d'heure de désactivation du signal vidéo est en dehors d'une seconde plage prédéterminée ;
contrôler l'événement d'heure de mise en marche initiale du signal de commande de puissance ou l'événement d'heure d'activation du signal vidéo, de telle sorte que la première différence d'heure soit dans la première plage prédéterminée ;
et/ou contrôler l'événement d'heure d'arrêt initiale du signal de commande de puissance ou l'événement d'heure de désactivation du signal vidéo de telle sorte que la seconde différence d'heure soit dans la seconde plage prédéterminée.

2. Appareil d'affichage selon la revendication 1, dans lequel :
l'événement d'heure d'activation du signal vidéo est le moment auquel le signal vidéo commence à être affiché sur l'unité d'affichage (30) et l'événement d'heure de désactivation du signal vidéo est le moment auquel le signal vidéo finit d'être affiché sur l'unité d'affichage (30).

3. Appareil d'affichage selon la revendication 1 ou 2, dans lequel le contrôleur (50) est configuré pour retarder l'événement d'heure d'activation du signal vidéo pour ajuster la première différence d'heure et pour retarder l'événement d'heure d'arrêt du signal de puissance pour ajuster la seconde différence d'heure.

4. Appareil d'affichage selon l'une quelconque des revendications précédentes, dans lequel le contrôleur (50) est configuré pour déterminer une durée de retard basée sur une différence entre l'événement d'heure de mise en marche du signal de puissance de rétroaction et l'événement d'heure de mise en marche initiale du signal de commande de puissance ou une différence entre l'événement d'heure d'arrêt du signal de puissance de rétroaction et l'événement d'heure d'arrêt initiale du signal de commande de puissance, et déterminer si la première et/ou la seconde différence(s) d'heure est en dehors de la première et/ou seconde plage(s) respective(s) prédéterminée(s) selon que la durée du retard est ou n'est pas dans une plage prédéterminée.

5. Appareil d'affichage selon la revendication 4, dans lequel le contrôleur (50) est configuré pour émettre le signal de commande de puissance ayant un événement d'heure de mise en marche et/ou d'arrêt initiale modifié vers la source de puissance (70) de façon à contrôler respectivement l'événement d'heure de mise en marche et/ou d'arrêt du signal de puissance.

6. Appareil d'affichage selon l'une quelconque des revendications précédentes, comprenant en outre :
une unité de sélection d'utilisateur (40) ;
dans lequel le contrôleur (50) est configuré, quand une durée de retard pour retarder l'événement d'heure de mise en marche et/ou d'arrêt du signal de puissance est entrée à travers l'unité de sélection de l'utilisateur (40), pour retarder au moins un de l'événement d'heure de mise en marche et/ou d'arrêt du signal de puissance et l'évènement d'heure d'activation et/ou de désactivation du signal vidéo selon la durée de retard.

7. Appareil d'affichage selon la revendication 6, comprenant en outre :
une unité d'enregistrement de la durée de retard (60) comprenant une durée de retard enregistrée, dans laquelle le contrôleur (50) est configuré pour retarder l'événement d'heure de mise en marche et/ou d'arrêt du signal de puissance ou l'évènement d'heure d'activation et/ou de désactivation du signal vidéo selon une durée correspondant à la durée de retard enregistrée dans l'unité d'enregistrement de la durée de retard (60).

8. Procédé de contrôle d'un appareil d'affichage, comprenant :
la fourniture d'un signal vidéo à une unité d'affichage (30) selon un événement d'heure d'activation quand le signal vidéo est activé et un événement d'heure de désactivation quand le signal vidéo est désactivé ;
la fourniture d'un signal de puissance depuis une source de puissance (70) à l'unité d'affichage (30) selon un événement d'heure de mise en marche quand le signal de puissance commence à être fourni à l'unité d'affichage (30) et un événement d'heure d'arrêt quand le signal de puissance est arrêté sur l'unité d'affichage (30), et l'émission d'un signal de puissance de rétroaction en provenance de la source de puissance (70) ;
l'application d'un signal de commande de puissance ayant une heure de mise en marche et d'arrêt initiale à la source de puissance (70) de façon à contrôler l'heure de mise en marche et d'arrêt du signal de puissance ;
**caractérisé en ce que** le procédé de contrôle comprend les étapes de procédé consistant à :
comparer l'événement d'heure de mise en marche du signal de puissance de rétroaction avec l'événement d'heure d'activation du signal vidéo et déterminer si une première différence d'heure entre l'événement d'heure de mise en marche du signal de puissance de rétroaction et l'événement d'heure d'activation du signal vidéo est en dehors d'une première plage prédéterminée ;
et/ou comparer l'événement d'heure d'arrêt du signal de puissance de rétroaction avec l'événement d'heure de désactivation du signal vidéo et déterminer si une seconde différence d'heure entre l'événement d'heure d'arrêt du signal de puissance de rétroaction et l'événement d'heure de désactivation du signal vidéo est en dehors d'une seconde plage prédéterminée ;
contrôler l'événement d'heure de mise en marche initiale du signal de commande de puissance ou l'événement d'heure d'activation du signal vidéo, de telle sorte que la première différence d'heure soit dans la première plage prédéterminée ;
et/ou contrôler l'événement d'heure d'arrêt initiale du signal de commande de puissance ou l'événement d'heure de désactivation du signal vidéo, de telle sorte que la seconde différence d'heure soit dans la seconde plage prédéterminée.

9. Procédé de contrôle selon la revendication 8, dans lequel :
l'évènement d'heure d'activation du signal vidéo est le moment auquel le signal vidéo commence à être affiché sur l'unité d'affichage (30) et l'événement d'heure de désactivation du signal vidéo est le moment auquel le signal vidéo finit d'être affiché sur l'unité d'affichage (30).

10. Procédé de contrôle selon la revendication 8 ou 9, dans lequel le contrôle de la différence d'heure comprend le retard de l'événement d'heure d'activation du signal vidéo pour ajuster la première différence d'heure et le retard de l'heure d'arrêt du signal de puissance pour ajuster la seconde différence d'heure.

11. Procédé de contrôle selon les revendications 8, 9 ou 10, comprenant en outre :
la détermination d'une durée de retard basée sur une différence entre l'événement d'heure de mise en marche du signal de puissance de rétroaction et l'événement d'heure de mise en marche initiale du signal de commande de puissance ou une différence entre l'évènement d'heure d'arrêt du signal de puissance de rétroaction et l'évènement d'heure d'arrêt initiale du signal de commande de puissance ; et
déterminer si la différence d'heure est en dehors de la première et/ou seconde plage(s) respective(s) prédéterminée(s) selon une détermination du fait que la durée du retard est ou n'est pas dans une plage prédéterminée.

12. Procédé de contrôle selon la revendication 11, dans lequel le contrôle du fait que la première et/ou la seconde différence(s) d'heure est dans la première et/ou la seconde plage(s) prédéterminée(s), respectivement, comprend la production du signal de commande de puissance ayant une heure de mise en marche et/ou d'arrêt initiale modifiée, respectivement, et la modification respectivement de l'heure de mise en marche et/ou d'arrêt du signal de puissance par le signal de commande de puissance.

13. Procédé de contrôle selon l'une quelconque des revendications 8 à 12, comprenant en outre :
la réception d'un signal d'entrée de durée de retard pour retarder l'événement d'heure de mise en marche et/ou d'arrêt du signal de puissance ; et
le retard d'au moins l'un de l'événement d'heure de mise en marche et/ou d'arrêt et de l'événement d'heure d'activation et/ou de désactivation selon une durée de retard.

14. Procédé de contrôle de l'appareil d'affichage selon la revendication 13, dans lequel le retard de l'événement d'heure de mise en marche et/ou d'arrêt selon une durée correspondant à la durée de retard comprend l'enregistrement de la durée de retard, et le retard d'au moins l'un de l'événement d'heure de mise en marche et/ou d'arrêt et l'événement d'heure d'activation et/ou de désactivation de la valeur de la durée de retard enregistrée.
